# FASCICULE DE BREVET EUROPEEN

(11) **EP 3 764 944 B1**
(45) Date de publication et mention de la délivrance du brevet: **21.09.2022**
(21) Numéro de dépôt: 19716466.8
(22) Date de dépôt: 12.03.2019
(51) Int. Cl.: A61C 19/00, A61C 1/18, F16N 3/06

(54) **DISPOSITIF ET PROCÉDÉ DE LUBRIFICATION DES PORTE-INSTRUMENTS DYNAMIQUES**
VORRICHTUNG UND VERFAHREN ZUR SCHMIERUNG VON DYNAMISCHEN INSTRUMENTENHALTERN
DEVICE AND METHOD FOR LUBRICATING DYNAMIC INSTRUMENT HOLDERS

(30) Priorité: 12.03.2018 FR 1852105
(43) Date de publication de la demande: 20.01.2021
(73) Titulaire: Micheau, Christophe, 81100 Castres (FR)
(72) Inventeur: Micheau, Christophe, 81100 Castres (FR)
(74) Mandataire: Vuillermoz, Bruno
(86) Numéro de dépôt international: PCT/FR2019/050527
(87) Numéro de publication internationale: WO 2019/175496

(56) Documents cités:
- WO-A1-00/61032
- CH-A- 402 530
- FR-A1- 2 453 351
- JP-A- 2017 094 012
- US-A- 5 131 845

## Description

### DOMAINE D'APPLICATION DE L'INVENTION

La présente invention a trait aux dispositifs médicaux mécaniques utilisés dans le domaine médical connus sous le nom de Porte-Instruments Dynamiques (P.I.D) et notamment aux adaptations permettant de les laver, sécher, lubrifier et stériliser dans les meilleures conditions.

### DESCRIPTION DE L'ART ANTÉRIEUR

Les Porte-Instruments Dynamiques (P.I.D) aussi appelés contre-angles ou pièces à mains sont des dispositifs médicaux mécaniques complexes. Ce sont tous les dispositifs qui génèrent un mouvement (de rotation, d'oscillation...) d'un instrument (fraise, polissoir, insert...). Un exemple de PID est le support d'outil tournant connu sous le nom de fraise dentaire destiné à la chirurgie bucco dentaire mais les pièces à mains de chirurgie sont également des PID. Le terme PID regroupe en fait tout instrument du milieu médical et/ou chirurgical présentant des éléments mobiles.

Ces PID doivent être correctement lavés, séchés, lubrifiés et stérilisés après chaque utilisation.

Les opérations de lavage, séchage et stérilisation sont nécessaires pour répondre aux contraintes d'hygiène et de non-contamination du milieu médical.

L'opération de lubrification est nécessaire pour des raisons mécaniques de fonctionnement et de durée de vie des dispositifs.

Or, la mise en œuvre de ces opérations présente des inconvénients.

En effet, les deux situations suivantes se rencontrent.

Une solution de lubrification consiste à lubrifier puis à stériliser les PID. Dans ce cas, le fonctionnement des stérilisateurs (autoclaves à vapeur d'eau) qui inclut de multiples phases de vide, fait que le lubrifiant disparaît complètement. Le PID n'est plus lubrifié ce qui implique un risque de dysfonctionnement et de vieillissement prématuré.

Une autre solution consiste à stériliser puis à lubrifier le PID. Dans ce cas, la stérilisation n'est plus garantie car le dispositif de lubrification ne peut être stérilisé tel qu'il est conçu actuellement. En effet, comme expliquées plus haut les huiles utilisées ne résistent pas aux températures des procédés de stérilisation rapide connus. De plus, l'utilisation d'un réservoir commun de lubrifiant rend la stérilisation délicate entre deux lubrifications. De même, la quantité de lubrifiant n'est pas maîtrisée.

Le document US5131845 décrit un contenant de lubrifiant et un embout à usage unique utilisés pour la lubrification d'un PDI avant et/ou après stérilisation de ce dernier.

### DESCRIPTION DE L'INVENTION

Partant de cet état de fait, le demandeur a mené des recherches visant à pouvoir lubrifier un PID tout en garantissant que cette étape puisse être réalisée dans des conditions stériles.

Ces recherches ont abouti à la conception et à la réalisation selon l'invention d'un dispositif de lubrification d'un porte-instrument dynamique médical dit PID remarquable en ce qu'il comprend un set stérile de lubrification à usage unique incluant :
- un réservoir amovible contenant une quantité pré-dosée de lubrifiant stérile, quantité correspondant à la quantité nécessaire à la lubrification d'un seul PID,
- un embout préformé d'une âme creuse de communication et comprenant deux extrémités,
la première extrémité dudit embout venant se fixer à une extrémité ouverte dudit PID de façon à autoriser le passage du lubrifiant vers le PID,
le réservoir étant préformé d'une extrémité formant goulot et la deuxième extrémité dudit embout est préformée de sorte que l'extrémité formant goulot dudit réservoir vient s'emmancher par friction dans ledit embout.

La quantité de lubrifiant est dosée pour une seule utilisation. Les différents sous-ensembles du dispositif de l'invention sont définis pour être à usage unique.

Par exemple, le PID peut faire l'objet d'une stérilisation par autoclave alors que le lubrifiant, son réservoir et l'embout peuvent faire l'objet d'une stérilisation plus longue plus respectueuse du lubrifiant.

Le PID stérilisé reçoit donc un lubrifiant stérile issu d'un emballage stérile. Le lubrifiant ne fait plus l'objet d'une stérilisation destructrice telle celle soumise au PID. La lubrification est réalisée après stérilisation du lubrifiant. L'embout sert d'interface mécanique et de canal fluidique entre le réservoir et le PID garantissant la fixation ponctuelle amovible et l'étanchéité. La lubrification est ainsi optimisée.

Un autre avantage de ce dispositif réside dans la création d'une monodose de lubrifiant. Ainsi, l'utilisateur non formé sait qu'il doit utiliser complètement la quantité pré-dosée de lubrifiant présente dans le réservoir pour une lubrification complète. De plus, il ne peut utiliser plus que cette dose. Le dispositif de l'invention optimise ainsi la lubrification en garantissant une bonne lubrification sans surconsommation de produit lubrifiant.

Comme indiqué dans la définition de l'invention ci-avant, ledit réservoir est préformé d'une extrémité formant goulot et la deuxième extrémité dudit embout est préformée de sorte que l'extrémité formant goulot dudit réservoir vient s'emmancher par friction dans ledit embout. Cette solution économique permet une fixation ponctuelle aisée garantissant l'étanchéité de la liaison. Cette solution est facile à fabriquer, elle permet d'envisager pour une pluralité de modèles d'embouts (et donc de PID) un même modèle de réservoir.

Plus précisément, selon une autre caractéristique particulièrement avantageuse de l'invention, l'embout tubulaire présente une âme creuse préformée pour présenter trois portions creuses coaxiales adjacentes :
- une première portion cylindrique creuse d'un premier diamètre partant de la première extrémité dont le diamètre permet à l'embout de venir s'insérer dans l'extrémité arrière du PID,
- une deuxième portion cylindrique creuse d'un deuxième diamètre inférieur au premier, permettant d'accueillir et de retenir par friction une fois ouverte l'extrémité formant goulot du réservoir,
- une troisième portion tronconique creuse s'évasant vers la deuxième extrémité permettant à l'embout de centrer et d'accueillir l'extrémité du réservoir laquelle est préformée sous le goulot d'une forme tronconique.

Selon une autre caractéristique particulièrement avantageuse, l'embout tubulaire présente une âme creuse préformée pour présenter trois portions creuses coaxiales adjacentes :
- une première portion tronconique creuse d'un premier diamètre partant de la première extrémité permettant à l'embout de venir s'insérer dans l'extrémité arrière du PID et allant en se rétrécissant vers l'intérieur jusqu'à un deuxième diamètre inférieur au premier,
- une deuxième portion cylindrique creuse adoptant ledit deuxième diamètre, permettant d'accueillir et de retenir par friction une fois ouverte l'extrémité formant goulot du réservoir,
- une troisième portion tronconique creuse s'évasant vers la deuxième extrémité permettant à l'embout de centrer et d'accueillir l'extrémité du réservoir laquelle est préformée sous le goulot d'une forme tronconique.

Les troisième et deuxième portions sont dimensionnées de sorte qu'une fois le réservoir installé dans l'embout, l'extrémité ouverte du réservoir débouche dans la première portion ce qui permet de diffuser plus directement le lubrifiant à l'intérieur des PID. De plus, en s'évasant vers la première extrémité, la troisième portion qui entre partiellement dans le PID facilite le passage du lubrifiant aussi bien vers l'intérieur que vers l'extérieur de l'axe central équipant certains PID.

Selon une autre caractéristique particulièrement avantageuse, la surface extérieure de l'embout présente une forme tronconique pour la première extrémité venant se fixer à l'extrémité ouverte du PID. L'extrémité extérieure de l'embout coopérant avec le PID se rétrécit de façon à rendre universelle son adaptation à plusieurs diamètres de l'ouverture des PID. Ce rétrécissement permet également d'optimiser l'étanchéité entre l'embout et ledit PID.

Afin d'optimiser la liaison de l'embout avec le PID ainsi qu'avec le réservoir aussi bien en ce qui concerne la friction que l'étanchéité, le matériau de l'embout a fait l'objet d'une étude.

Selon une caractéristique particulièrement avantageuse de l'invention, l'embout est en polyéthylène. Selon un mode de réalisation préféré mais non limitatif, le polyéthylène utilisé est de la série 5502.

Selon une autre caractéristique particulièrement avantageuse, cet embout en polyéthylène est associé à un matériau de type SEBS (élastomère thermoplastique). Cette association permet d'obtenir une dureté de 50 Shore A.

Selon une autre caractéristique particulièrement avantageuse de l'invention, ledit réservoir forme un ensemble monobloc avec son extrémité formant le goulot venant coopérer avec l'embout, goulot scellé après remplissage.

Selon une autre caractéristique particulièrement avantageuse de l'invention, ledit réservoir est préformé d'un premier goulot élargi présentant une forme cylindrique filetée extérieurement et intérieurement, le filetage intérieur accueillant un manchon vissable formant goulot étroit préformé pour coopérer avec l'embout, le filetage extérieur accueillant un bouchon vissable. Une telle configuration a pour avantage d'optimiser la fermeture de la monodose après remplissage malgré le fait que le liquide soit un lubrifiant.

Selon un mode préféré de réalisation, ledit réservoir est réalisé en plastique et plus particulièrement en polyéthylène.

Selon une autre caractéristique particulièrement avantageuse de l'invention, ledit réservoir est souple et contient une quantité pré-dosée de lubrifiant et d'air venant s'introduire dans le PID sous la pression exercée par l'utilisateur sur les parois du réservoir. La mise en œuvre du déplacement du fluide par pression sur les parois souples est économique, fiable et évite l'utilisation d'un actionneur. De plus, la présence d'air permet de créer une émulsion de lubrifiant facilitant la pénétration du lubrifiant et de s'assurer que la totalité du volume de lubrifiant est transféré dans le corps du PID.

Enfin, la présence d'air permet d'utiliser un réservoir de volume plus important, plus facile à manier et plus facile à presser. La présence d'air permet donc de disposer d'un réservoir plus ergonomique.

Selon un mode de réalisation préféré, le volume intérieur du réservoir est occupé à environ 30% de liquide.

Selon une autre caractéristique particulièrement avantageuse de l'invention, l'extrémité formant goulot du réservoir venant s'emmancher dans ledit embout est scellée et fait l'objet d'une rupture à des fins d'ouverture avant son emmanchement dans l'embout. Cette rupture est réalisée juste avant emmanchement pour garder les conditions d'asepsie les plus optimales possibles.

Selon une autre caractéristique particulièrement avantageuse de l'invention, la base de l'extrémité formant goulot du réservoir venant s'emmancher dans ledit embout est préformée d'un filetage et fermée au moyen d'un bouchon vissé sur le filetage. Le bouchon est retiré par dévissement pour autoriser l'emmanchement du goulot dans l'embout et le passage du lubrifiant.

Selon une autre caractéristique, ledit réservoir est préformé selon une forme biseautée devenant plus étroite en s'éloignant de l'extrémité formant goulot. Une telle forme facilite la saisie et l'expulsion du lubrifiant tout en garantissant que l'ensemble du volume de lubrifiant est expulsé.

Selon une autre caractéristique particulièrement avantageuse de l'invention, le dispositif comprend un premier emballage accueillant un réservoir et un embout, ledit premier emballage scellé étant accueilli seul dans un deuxième emballage scellé légèrement plus grand. Il s'agit d'un système double poche.

On glisse la monodose et l'embout ensemble dans un premier emballage associant du papier à du plastique polyéthylène que l'on scelle. On glisse ce sous-ensemble dans un deuxième emballage plus grand associant du papier à du plastique polyéthylène que l'on scelle.

L'ensemble formant un set de lubrification emballé qui associé à d'autres sets identiques fait l'objet d'un conditionnement en carton.

La règle des trois emballages est ainsi respectée.

Le deuxième emballage est ouvert avant de rentrer dans le bloc opératoire. Le premier emballage est ouvert lorsque la lubrification doit être réalisée. La réunion du réservoir de lubrifiant et de l'interface mécanique entre le réservoir et le PID dans un même emballage, évite la gestion et le rangement séparés de deux éléments.

On comprend que le dispositif de l'invention définit un nouveau procédé de lubrification également objet de l'invention.

Selon l'invention, le procédé de lubrification d'un porte-instrument dynamique dit PID exploitant le dispositif décrit ci-dessus, est remarquable en ce qu'il comprend les opérations suivantes :
- remplissage d'un réservoir souple au moyen d'un lubrifiant et d'air,
- fermeture par un bouchon,
- mise en place dudit réservoir et d'un embout dans un premier emballage,
- scellage du premier emballage,
- mise en place du premier emballage scellé dans un deuxième emballage légèrement plus grand,
- scellage du deuxième emballage,
- stérilisation des emballages,
- ouverture du deuxième emballage (avant le bloc opératoire dans le cas d'une utilisation en bloc opératoire),
- ouverture du premier emballage (dans le bloc),
- ouverture du réservoir,
- emmanchement du réservoir ouvert dans une extrémité de l'embout,
- emmanchement de la deuxième extrémité de l'embout à l'extrémité arrière du PID,
- pression sur le réservoir par l'utilisateur jusqu'à complète vidange.

Ce procédé permet de disposer de sous-ensembles stérilisés (c'est-à-dire d'un set de lubrification stérile) venant lubrifier un PID stérilisé. L'asepsie et la lubrification sont donc optimisées. Ce principe de conditionnement par double emballage des sets de lubrification stériles est nouveau.

Si le PID peut faire l'objet d'une stérilisation en autoclave, selon une autre caractéristique particulièrement avantageuse de l'invention, la stérilisation des emballages est mise en oeuvre par un procédé de stérilisation par rayons gamma. Ce procédé de stérilisation est un procédé à basse température respectant le lubrifiant qui peut ainsi garder toutes ses caractéristiques.

Selon une autre caractéristique particulièrement avantageuse, les deuxièmes emballages contenant les premiers emballages sont rangés en lot dans des cartons, l'ensemble faisant l'objet de la stérilisation. Cette succession de trois conditionnements permet de répondre aux dernières normes d'asepsie.

Selon une caractéristique particulièrement avantageuse, ledit lubrifiant est une huile blanche. Cette huile accepte la stérilisation par rayons gamma sans voir ses propriétés altérées.

De plus, l'embout et le réservoir mais également les emballages (premier et deuxième) sont en polyéthylène acceptant ce type de rayonnement à des fins de stérilisation.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif, plusieurs modes de réalisation d'un dispositif de lubrification conforme à l'invention.

### Brève description des dessins

La figure 1 est un dessin schématique d'une vue en perspective extérieure d'un mode de réalisation d'un réservoir d'un dispositif de l'invention ;
La figure 2 est un dessin schématique d'une vue de côté extérieure du réservoir de la figure 1 ;
La figure 3 est un dessin schématique d'une vue en perspective extérieure d'un mode de réalisation d'un embout d'un dispositif de l'invention ;
La figure 4 est un dessin schématique d'une vue de côté en coupe de l'embout de la figure 3 ;
La figure 5 est un dessin schématique d'une vue extérieure de l'assemblage du réservoir auquel le bouchon sécable a été retiré avec l'embout ;
La figure 6 est un dessin schématique d'une vue en coupe de l'assemblage du réservoir avec l'embout ;
La figure 7 est un dessin schématique d'une vue extérieure de côté d'un assemblage du réservoir avec l'embout installé sur un PID ;
La figure 8 est un dessin schématique d'une vue de côté en perspective d'un autre mode de réalisation d'un réservoir d'un dispositif de l'invention ;
La figure 9 est un dessin schématique d'une vue en coupe d'un autre mode de réalisation d'un embout conforme à l'invention ;
La figure 10 est un dessin schématique d'une vue en coupe du réservoir de la figure 8 emmanché sur l'embout de la figure 9.

### DESCRIPTION DES MODES PRÉFÉRÉS DE RÉALISATION

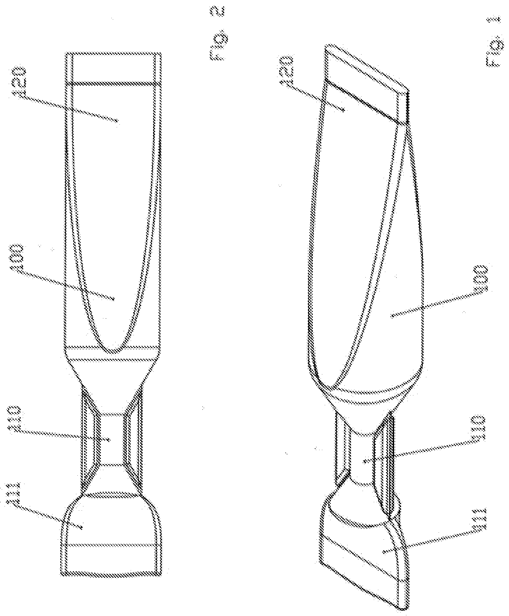

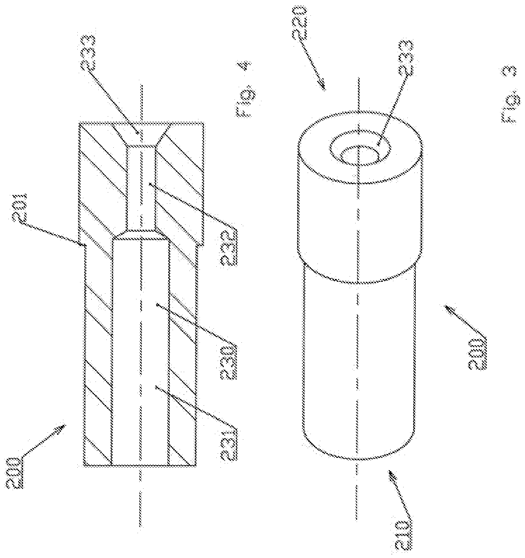

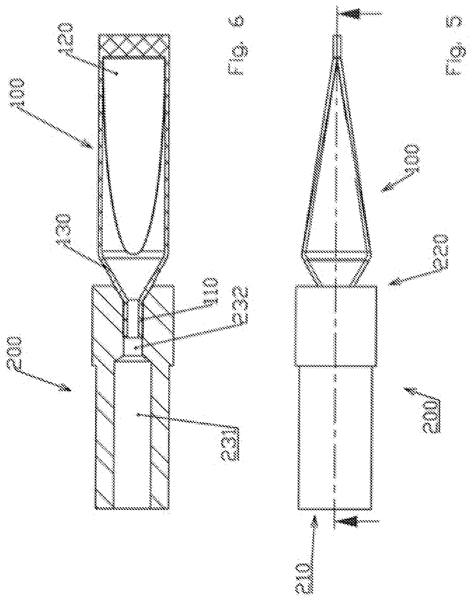

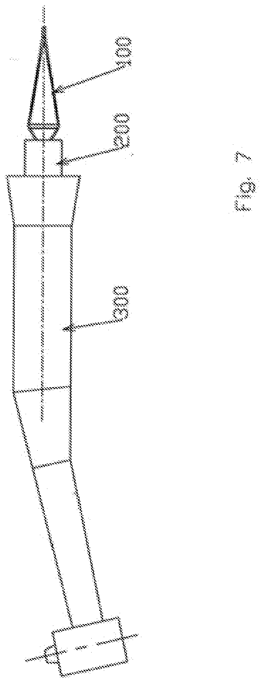

Le dispositif de lubrification de l'invention est principalement formé d'un réservoir 100 illustré seul sur les dessins des figures 1 et 2 et par un embout 200 illustré seul sur les dessins des figures 3 et 4. Leur emmanchement est illustré par les dessins des figures 5 et 6. Leur installation sur un PID 300 à des fins de lubrification est illustrée sur le dessin de la figure 7.

Les figures 1 et 2 montrent un réservoir 100 formé d'un corps creux équipé à son extrémité avant d'une forme tronconique se terminant par un goulot 110 et à son autre extrémité 120 d'une forme biseautée se rétrécissant vers l'arrière. Le réservoir 100 est réalisé dans un matériau plastique (ici en polyéthylène) et son goulot 110 est fermé après remplissage par un bouchon 111. La forme biseautée facilite l'expulsion du volume total.

Les figures 3 et 4 montrent un embout 200 formé d'un corps tubulaire présentant un épaulement extérieur 201 fabriqué en polyéthylène. Cet embout 200 est préformé pour être universel de façon à pouvoir s'insérer à une première extrémité 210 dans tous les PID, toutes les pièces à main et contre-angles utilisés en chirurgie dentaire et pour recevoir à une deuxième extrémité 220 le goulot 110 ouvert du réservoir 100. L'épaulement extérieur 201 permet de différencier l'extrémité 220 coopérant avec le réservoir 100 de celle 210 coopérant avec le PID 300 (cf. figure 7).

L'âme creuse 230 est préformée pour présenter trois portions coaxiales creuses adjacentes :
- une première portion cylindrique creuse 231 d'un premier diamètre partant de la première extrémité 210 dont le diamètre permet à l'embout 200 de venir s'insérer dans l'extrémité arrière du PID 300 (cf. figure 7),
- une deuxième portion cylindrique creuse 232 d'un deuxième diamètre inférieur au premier, permettant d'accueillir et de retenir par friction le goulot 110 ouvert du réservoir 100,
- une troisième portion tronconique creuse 233 s'évasant vers la deuxième extrémité 220 permettant à l'embout de centrer et d'accueillir l'extrémité du réservoir 100 laquelle est préformée sous le goulot 110 d'une forme tronconique.

Cette friction contribue également à l'étanchéité de cette liaison. La forme tronconique facilite le positionnement dudit goulot.

Comme illustré sur les dessins des figures 5 et 6, cette friction et cette étanchéité sont rendues possibles par :
- l'ajustement serré établi entre la surface intérieure du cylindre creux 232 et la surface extérieure du goulot 110,
- la préformation tronconique concave (correspondant à la portion 233) pour l'embout 200 et convexe 130 pour le réservoir 100.

Le matériau du réservoir 100 est souple et contribue à l'élasticité du goulot 110 qui peut se déformer pour autoriser son introduction dans le cylindre 231 et pour retenir par friction le réservoir 100 dans l'embout 200. Le matériau de l'embout 200 est également souple pour faciliter les insertions, la retenue par friction et l'étanchéité.

Selon un mode de réalisation préféré mais non limitatif, l'embout 200 et le réservoir 100 sont en polyéthylène. L'embout 200 fait en outre l'objet d'une association avec un élastomère thermoplastique de type SEBS afin d'atteindre une dureté de 50 Shore A.

La longueur du cylindre creux 231 est déterminée, comme pour son diamètre, de façon à autoriser son insertion sur l'extrémité ouverte correspondant à l'arrière du PID 300 comme cela est illustré sur le dessin de la figure 7. Le diamètre extérieur de la première extrémité 210 de l'embout 200 est également défini pour établir une liaison par friction et étanche avec l'extrémité du PID. Le PID 300 est alors prêt à être lubrifié.

Conformément à l'invention, ce PID 300 a déjà fait l'objet d'une stérilisation avant l'opération de lubrification et le réservoir 100 et son embout 200 sont retirés d'un emballage stérile (non illustré).

L'utilisateur dans un milieu stérile assure la rupture du bouchon 111 et emmanche le réservoir 100 dans l'embout 200 comme illustré sur le dessin de la figure 5.

Puis l'ensemble est emmanché sur l'extrémité ouverte du PID 300. L'ensemble est orienté pour prendre une position verticale avec le PID vers le bas et le réservoir vers le haut. L'utilisateur presse alors le réservoir 100 pour faire passer le lubrifiant dans le PID 300 en passant par l'embout 200. Classiquement, le lubrifiant s'échappe de l'extrémité basse du PID 300. Ce dernier est alors stérile et lubrifié, pleinement opérationnel.

L'embout 200 et le réservoir 100 sont à usage unique et sont donc jetés après une seule utilisation.

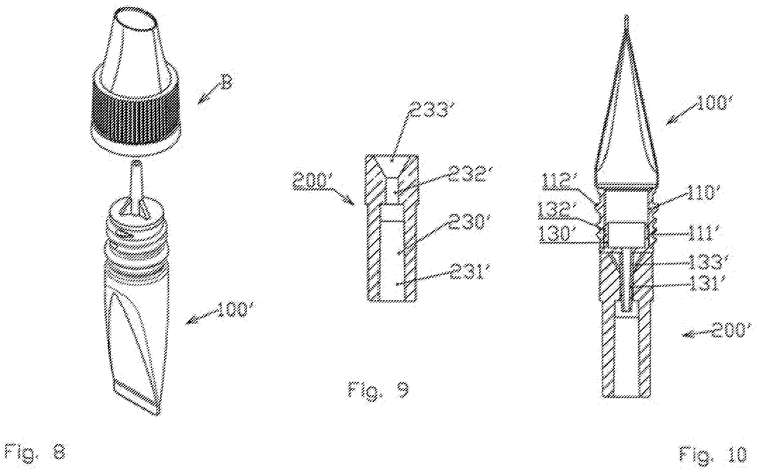

Les dessins des figures 8, 9 et 10 illustrent d'autres modes de réalisation aussi bien pour le réservoir que pour l'embout.

Comme illustré par le dessin de la figure 8 le réservoir 100' est un réservoir qui se ferme par un bouchon vissé B.

Comme illustré plus en détail sur le dessin de la figure 10, ledit réservoir 100' adopte la même forme arrière que le réservoir 100 mais se distingue de ce dernier du fait de l'exploitation d'une solution vissée aussi bien pour fermer le réservoir 100' que pour accueillir un manchon 130' qui se visse dans le goulot 110' et va coopérer avec l'embout 200'.

Ce réservoir 100' est donc préformé d'un premier goulot élargi 110' présentant une forme cylindrique filetée extérieurement et intérieurement. Le filetage intérieur 111' accueille un manchon vissable 130' formant à une première extrémité un goulot étroit 131' préformé pour coopérer avec l'embout 200' et à une deuxième extrémité un cylindre 132' fileté extérieurement. Le filetage extérieur 112' accueille le bouchon vissable B. Le goulot étroit 131' reste donc lisse et peut coopérer avec l'âme creuse 230' de l'embout à des fins de coincement et maintien de l'étanchéité lors du passage du fluide du réservoir vers le PID.

Comme illustré sur le dessin de la figure 9, l'embout tubulaire 200' présente une âme creuse 230' préformée pour présenter trois portions creuses coaxiales adjacentes :
- une première portion tronconique creuse 231' d'un premier diamètre partant de la première extrémité permettant à l'embout 200' de venir s'insérer dans l'extrémité arrière du PID et allant en se rétrécissant vers l'intérieur jusqu'à un deuxième diamètre inférieur au premier,
- une deuxième portion cylindrique creuse 232' adoptant ledit deuxième diamètre, permettant d'accueillir et de retenir par friction une fois ouverte l'extrémité 131' formant goulot du réservoir 100',
- une troisième portion tronconique creuse 233' s'évasant vers la deuxième extrémité permettant à l'embout 200' de centrer et d'accueillir l'extrémité du réservoir laquelle est préformée sous le goulot 131' d'une forme tronconique 133'.

L'évasement vers l'extérieur (ou le rétrécissement vers l'intérieur) de la première portion 231' est illustré mais peu visible car l'angle de conicité est faible.

De même, la surface extérieure n'adopte pas la forme d'un cylindre simple mais celle de deux troncs de cône de sorte que les deux extrémités extérieures de l'embout sont rétrécies par rapport à la partie médiane de l'embout. Ces formes coniques sont peu visibles car l'angle de conicité est faible. L'extrémité de l'embout 200' qui coopère avec le réservoir 100' est rétrécie pour des raisons de démoulage de cette pièce plastique et celle qui coopère avec le PID pour des raisons d'adaptabilité et d'étanchéité pour plusieurs diamètres d'ouverture du PID.

Comme illustrée sur le dessin de la figure 10, l'extrémité ouverte 131' du réservoir 100' débouche dans la première portion 231'.

La première extrémité de l'embout 200' est chanfreinée afin de faciliter son introduction dans le PID.

On comprend que le dispositif et le procédé, qui viennent d'être ci-dessus décrits et représentés, l'ont été en vue d'une divulgation plutôt que d'une limitation, le cadre de l'invention étant délimité par les revendications.

## Revendications

1. Dispositif de lubrification d'un porte-instrument dynamique médical dit PID (300), comprenant un set stérile de lubrification à usage unique incluant :
- un réservoir (100) contenant une quantité pré-dosée de lubrifiant stérile, quantité correspondant à la quantité nécessaire à la lubrification d'un seul PID (300),
- un embout (200) tubulaire préformé d'une âme creuse de communication (230) et comprenant deux extrémités,
la première extrémité (210) dudit embout (200) venant se fixer à une extrémité ouverte dudit PID (300) de façon à autoriser le passage du lubrifiant vers le PID (300),
le réservoir (100) étant préformé d'une extrémité (110) formant goulot et la deuxième extrémité (220) dudit embout (200) est préformée de sorte que l'extrémité (110) formant goulot dudit réservoir (100) vient s'emmancher par friction dans ledit embout (200).

2. Dispositif selon la revendication 1, **CARACTÉRISÉ PAR LE FAIT QUE** ledit réservoir (100) est souple et contient une quantité pré-dosée de lubrifiant et d'air venant s'introduire dans le PID (300) sous la pression exercée par l'utilisateur sur les parois du réservoir (100).

3. Dispositif selon la revendication 1, **CARACTÉRISÉ PAR LE FAIT QUE** ledit réservoir (100) est préformé selon une forme biseautée devenant plus étroite en s'éloignant de l'extrémité (110) formant goulot.

4. Dispositif selon la revendication 1, **CARACTÉRISÉ PAR LE FAIT QU'**il comprend un premier emballage accueillant un seul réservoir (100) et un seul embout (200), ledit premier emballage scellé étant accueilli seul dans un deuxième emballage scellé légèrement plus grand.

5. Dispositif selon la revendication 1, **CARACTÉRISÉ PAR LE FAIT QUE** l'embout (200) tubulaire présente une âme creuse (230) préformée pour présenter trois portions creuses coaxiales adjacentes :
- une première portion cylindrique creuse (231) d'un premier diamètre partant de la première extrémité (210) dont le diamètre permet à l'embout (200) de venir s'insérer dans l'extrémité arrière du PID (300),
- une deuxième portion cylindrique creuse (232) d'un deuxième diamètre inférieur au premier, permettant d'accueillir et de retenir par friction une fois ouverte l'extrémité (110) formant goulot du réservoir (100),
- une troisième portion tronconique creuse (233) s'évasant vers la deuxième extrémité (220) permettant à l'embout de centrer et d'accueillir l'extrémité du réservoir (100) laquelle est préformée sous l'extrémité (110) formant goulot d'une forme tronconique.

6. Dispositif selon la revendication 1, **CARACTÉRISÉ PAR LE FAIT QUE** l'embout est en polyéthylène associé à un matériau de type SEBS (élastomère thermoplastique).

7. Dispositif selon la revendication 1, **CARACTÉRISÉ PAR LE FAIT QUE** le lubrifiant est une huile blanche.

8. Dispositif selon la revendication 1, **CARACTÉRISÉ PAR LE FAIT QUE** ledit réservoir forme un ensemble monobloc avec son extrémité formant le goulot venant coopérer avec l'embout, goulot scellé après remplissage.

9. Dispositif selon la revendication 1, **CARACTÉRISÉ PAR LE FAIT QUE** ledit réservoir (100') est préformé d'un premier goulot élargi présentant une forme cylindrique filetée extérieurement et intérieurement, le filetage intérieur (111') accueillant un manchon vissable (130') formant goulot étroit préformé pour coopérer avec l'embout (200'), le filetage extérieur (112') accueillant un bouchon vissable (B).

10. Dispositif selon la revendication 1, **CARACTÉRISÉ PAR LE FAIT QUE** la base de l'extrémité formant goulot du réservoir venant s'emmancher dans ledit embout est préformée d'un filetage extérieur, ladite extrémité étant fermée au moyen d'un bouchon vissé sur le filetage.

11. Dispositif selon la revendication 1, **CARACTÉRISÉ PAR LE FAIT QUE** l'embout tubulaire (200') présente une âme creuse (230') préformée pour présenter trois portions creuses coaxiales adjacentes :
- une première portion tronconique creuse (231') d'un premier diamètre partant de la première extrémité permettant à l'embout de venir s'insérer dans l'extrémité arrière du PID et allant en se rétrécissant vers l'intérieur jusqu'à un deuxième diamètre inférieur au premier,
- une deuxième portion cylindrique creuse (232') adoptant ledit deuxième diamètre, permettant d'accueillir et de retenir par friction une fois ouverte l'extrémité formant goulot du réservoir,
- une troisième portion tronconique creuse (233') s'évasant vers la deuxième extrémité permettant à l'embout de centrer et d'accueillir l'extrémité du réservoir laquelle est préformée sous le goulot d'une forme tronconique.

12. Dispositif selon les revendications 5 ou 11, **CARACTÉRISÉ PAR LE FAIT QUE** les troisième (233') et deuxième (232') portions sont dimensionnées de sorte qu'une fois le réservoir installé dans l'embout, l'extrémité ouverte (131') du réservoir (100') débouche dans la première portion (231').

13. Dispositif selon la revendication 1, **CARACTÉRISÉ PAR LE FAIT QUE** la surface extérieure de l'embout (200') présente une forme tronconique pour la première extrémité venant se fixer à l'extrémité ouverte du PID.

14. Procédé de lubrification d'un porte-instrument dynamique médical dit PID (300) exploitant le dispositif selon l'une quelconque des revendications précédentes, comprenant les opérations suivantes :
- remplissage d'un réservoir souple (100) au moyen d'un lubrifiant et d'air,
- fermeture par un bouchon (111),
- mise en place dudit réservoir (100) et d'un embout (200) dans un premier emballage,
- scellage du premier emballage,
- mise en place du premier emballage scellé dans un deuxième emballage légèrement plus grand,
- scellage du deuxième emballage,
- stérilisation des emballages,
- stérilisation du PID (300),
- ouverture du deuxième emballage,
- ouverture du premier emballage,
- ouverture du réservoir (100),
- emmanchement du réservoir (100) ouvert dans une extrémité (220) de l'embout (200),
- emmanchement de l'embout (200) à l'extrémité arrière du PID (300),
- pression sur le réservoir (100) par l'utilisateur jusqu'à complète vidange.

15. Procédé selon la revendication 14, **CARACTÉRISÉ EN CE QUE** la stérilisation des emballages est mise en oeuvre par rayons gamma.

16. Procédé selon la revendication 14, **CARACTÉRISÉ EN CE QUE** les deuxièmes emballages contenant les premiers emballages sont rangés en lot dans des cartons, l'ensemble faisant l'objet de la stérilisation.

## Patentansprüche

1. Vorrichtung zum Schmieren eines dynamischen medizinischen Instrumentenhalters, der PID (300) genannt wird, die ein steriles Schmierset zum einmaligen Gebrauch aufweist, umfassend:
- einen Behälter (100), der eine vordosierte Menge an sterilem Schmiermittel enthält, Menge, die der Menge entspricht, die zum Schmieren eines einzelnen PID (300) erforderlich ist,
- ein röhrenförmiges Endstück (200), das mit einem hohlen Verbindungskern (230) vorgeformt ist und zwei Enden aufweist, wobei das erste Ende (210) des Endstücks (200) an einem offenen Ende des PID (300) derart befestigt wird, um den Durchtritt des Schmiermittels zum PID (300) zu ermöglichen, wobei der Behälter (100) mit einem Ende (110) vorgeformt ist, das einen Hals bildet, und das zweite Ende (220) des Endstücks (200) derart vorgeformt ist, dass das Ende (110) des Behälters (100), das einen Hals bildet, durch Reibung in das Endstück (200) eingesteckt wird.

2. Vorrichtung nach Anspruch 1, **DADURCH GEKENNZEICHNET, DASS** der Behälter (100) flexibel ist und eine vordosierte Menge an Schmiermittel und Luft enthält, die unter dem Druck, der von dem Benutzer auf die Wände des Behälters (100) ausgeübt wird, in den PID (300) eintritt.

3. Vorrichtung nach Anspruch 1, **DADURCH GEKENNZEICHNET, DASS** der Behälter (100) in einer abgeschrägten Form vorgeformt ist, die vom Ende (110) weg, das einen Hals bildet, schmaler wird.

4. Vorrichtung nach Anspruch 1, **DADURCH GEKENNZEICHNET, DASS** sie eine erste Verpackung aufweist, die einen einzigen Behälter (100) und ein einziges Endstück (200) aufnimmt, wobei nur die versiegelte Verpackung in einer zweiten versiegelten Verpackung aufgenommen wird, die etwas größer ist.

5. Vorrichtung nach Anspruch 1, **DADURCH GEKENNZEICHNET, DASS** das röhrenförmige Endstück (200), einen hohlen Kern (230) aufweist, der vorgeformt ist, um drei angrenzende koaxiale hohle Abschnitte aufzuweisen:
- einen ersten hohlen zylindrischen Abschnitt (231) mit einem ersten Durchmesser ausgehend von dem ersten Ende (210), dessen Durchmesser dem Endstück (200) ermöglicht, in das hintere Ende des PID (300) eingeführt zu werden,
- einen zweiten hohlen zylindrischen Abschnitt (232) mit einem zweiten Durchmesser, der kleiner als der erste ist, der nach dem Öffnen ermöglicht, das Ende (110) des Behälters (100), das einen Hals bildet, aufzunehmen und durch Reibung festzuhalten,
- einen dritten hohlen kegelstumpfförmigen Abschnitt (233), der sich zum zweiten Ende (220) hin erweitert, der dem Endstück ermöglicht, das Ende des Behälters (100) zu zentrieren und aufzunehmen, das unter dem Ende (110), das einen Hals bildet, kegelstumpfförmig vorgeformt ist.

6. Vorrichtung nach Anspruch 1, **DADURCH GEKENNZEICHNET, DASS** das Endstück aus Polyethylen in Verbindung mit einem Material vom Typ SEBS (thermoplastisches Elastomer) besteht.

7. Vorrichtung nach Anspruch 1, **DADURCH GEKENNZEICHNET, DASS** das Schmiermittel ein Weißöl ist.

8. Vorrichtung nach Anspruch 1, **DADURCH GEKENNZEICHNET, DASS** der Behälter eine einstückige Anordnung bildet, deren Ende den Hals bildet, der mit dem Endstück zusammenwirkt, der nach dem Befüllen versiegelt wird.

9. Vorrichtung nach Anspruch 1, **DADURCH GEKENNZEICHNET, DASS** der Behälter (100) mit einem ersten erweiterten Hals vorgeformt ist, der eine zylindrische Form mit Außen- und Innengewinde aufweist, wobei das Innengewinde (111") eine Schraubhülse (130) aufnimmt, die einen schmalen Hals bildet, der vorgeformt ist, um mit dem Endstück (200) zusammenzuwirken, wobei das Außengewinde (112") eine Schraubkappe (B) aufnimmt.

10. Vorrichtung nach Anspruch 1, **DADURCH GEKENNZEICHNET, DASS** die Basis des Endes (110) des Behälters (100), das einen Hals bildet, das in das Endstück eingesteckt wird, mit einem Außengewinde vorgeformt ist, wobei das Ende mit einer Kappe verschlossen wird, die auf das Gewinde geschraubt ist.

11. Vorrichtung nach Anspruch 1, **DADURCH GEKENNZEICHNET, DASS** das röhrenförmige Endstück (200'), einen hohlen Kern (230) aufweist, der vorgeformt ist, um drei angrenzende koaxiale hohle Abschnitte aufzuweisen:
- einen ersten hohlen kegelstumpfförmigen Abschnitt (231) mit einem ersten Durchmesser ausgehend von dem ersten Ende, der dem Endstück ermöglicht, in das hintere Ende des PID eingeführt zu werden und sich nach innen bis zu einem zweiten Durchmesser verjüngt, der kleiner als der erste ist,
- einen zweiten hohlen zylindrischen Abschnitt (232'), der den zweiten Durchmesser annimmt, der nach dem Öffnen ermöglicht, das Ende des Behälters, das einen Hals bildet, aufzunehmen und durch Reibung festzuhalten,
- einen dritten hohlen kegelstumpfförmigen Abschnitt (233), der sich zum zweiten Ende hin erweitert, wodurch dem Endstück ermöglicht wird, das Ende des Behälters zu zentrieren und aufzunehmen, das unter dem Hals kegelstumpfförmig vorgeformt ist.

12. Vorrichtung nach Anspruch 5 oder 11, **DADURCH GEKENNZEICHNET, DASS** der dritte (233) und der zweite (232') Abschnitt derart dimensioniert sind, dass das offene Ende (131') des Behälters (100'), nachdem der Behälter in dem Endstück installiert ist, in den ersten Abschnitt (231) mündet.

13. Vorrichtung nach Anspruch 1, **DADURCH GEKENNZEICHNET, DASS** die Außenfläche des Endstücks (200') eine kegelstumpfförmige Form für das erste Ende aufweist, das an dem offenen Ende des PID befestigt wird.

14. Verfahren zum Schmieren eines dynamischen medizinischen Instrumentenhalters, der PID (300) genannt wird, das die Vorrichtung nach einem der vorhergehenden Ansprüche nutzt, umfassend die folgenden Vorgänge:
- Befüllen des flexiblen Behälters (100) mit einem Schmiermittel und Luft,
- Verschließen durch eine Kappe (111),
- Anordnen des Behälters (100) und eines Endstücks (200) in einer ersten Verpackung,
- Versiegeln der ersten Verpackung,
- Anordnen der ersten versiegelten Verpackung in einer zweiten Verpackung, die etwas größer ist.
- Versiegeln der zweiten Verpackung,
- Sterilisieren der Verpackung,
- Sterilisieren des PID (300),
- Öffnen der zweiten Verpackung,
- Öffnen der ersten Verpackung,
- Öffnen des Behälters (100),
- Stecken des offenen Behälters (100) in ein Ende (220) des Endstücks (200),
- Stecken des Endstücks (200) auf das hintere Ende des PID (300),
- Drücken auf den Behälter (100) durch den Benutzer bis zur vollständigen Entleerung.

15. Verfahren nach Anspruch 14, **DADURCH GEKENNZEICHNET, DASS** das Sterilisieren der Verpackungen durch Gammastrahlen erfolgt.

16. Verfahren nach Anspruch 14, **DADURCH GEKENNZEICHNET, DASS** die zweiten Verpackungen, die die ersten Verpackungen enthalten, chargenweise in Kartons untergebracht werden, wobei das Ganze einer Sterilisation unterzogen wird.

## Claims

1. Device for lubricating a dynamic medical instrument holder, called PID, (300), comprising a sterile disposable lubricating set including:
- a container (100) containing a pre-dosed quantity of sterile lubricant, said quantity corresponding to the quantity required for the lubrication of a single PID (300),
- a tubular end piece (200) preformed with a communicating hollow core (230) and comprising two ends,
the first end (210) of said end piece (200) attaching to an open end of said PID (300) in such a way as to allow the flow of the lubricant to the PID (300),
the container (100) being preformed with one end (110) forming a neck and the second end (220) of said end piece (200) is preformed so that the end (110) forming a neck of said container (100) fits by friction into said end piece (200).

2. Device according to claim 1, **CHARACTERIZED BY** THE FACT THAT said container (100) is flexible and contains a pre-dosed quantity of lubricant and air which entering into the PID (300) under the pressure exerted by the user on the walls of the container (100).

3. Device according to claim 1, **CHARACTERIZED BY** THE FACT THAT said container (100) is preformed in a beveled shape tapering away from the end (110) forming the neck.

4. Device according to claim 1, **CHARACTERIZED BY** THE FACT THAT it comprises a first package receiving a single container (100) and a single end piece (200), said first sealed package being received alone in a second slightly sealed package.

5. Device according to claim 1, **CHARACTERIZED BY** THE FACT THAT the tubular end piece (200) has a hollow core (230) preformed to include three adjacent coaxial hollow portions:
- a first hollow cylindrical portion (231) of a first diameter starting from the first end (210), the diameter of which allows the end piece (200) to fit into the rear end of the PID (300),
- a second hollow cylindrical portion (232) of a second diameter smaller than the first, allowing to receive and retain by friction, once opened, the end (110) forming the neck of the container (100),
- a third hollow frustoconical portion (233) flaring out towards the second end (220), allowing the end piece to center and receive the end of the container (100), which end is preformed with a frustoconical shape under the end (110) forming the neck.

6. Device according to claim 1, **CHARACTERIZED BY** THE FACT THAT the end piece is made of polyethylene combined with a material such as SEBS (thermoplastic elastomer).

7. Device according to claim 1, **CHARACTERIZED IN THAT** the lubricant is a white oil.

8. Device according to claim 1, **CHARACTERIZED BY** THE FACT THAT said container forms a one-piece assembly with its end that forms the neck engaging with the end piece, the neck being sealed after filling.

9. Device according to claim 1, **CHARACTERIZED BY** THE FACT THAT said container (100') is preformed with a first widened neck having an externally and internally threaded cylindrical shape, the internal thread (111') receiving a screwable sleeve (130') forming a narrow neck preformed to engage with the end piece (200'), the external thread (112') receiving a screw cap (B).

10. Device according to claim 1, **CHARACTERIZED BY** THE FACT THAT the base of the end forming the neck of the container fitting into said end piece is preformed with an external thread, said end being closed by means of a plug screwed on the thread.

11. Device according to claim 1, **CHARACTERIZED BY** THE FACT THAT the tubular end piece (200') has a hollow core (230') preformed to include three adjacent coaxial hollow portions:
- a first hollow tapered portion (231') of a first diameter starting from the first end, the diameter allowing the end piece to be inserted into the rear end of the PID and tapering inwards to a second diameter smaller than the first,
- a second hollow cylindrical portion (232') taking on the said second diameter, allowing to receive and retain by friction, once opened, the end forming the neck of the container,
- a third hollow frustoconical portion (233') flaring out towards the second end, allowing the end piece to center and receive the end of the container which is preformed with a frustoconical shape under the neck.

12. Device according to Claims 5 or 11, **CHARACTERIZED BY** THE FACT THAT the third (233') and second (232') portions are dimensioned so that once the container is installed in the end piece, the open end (131') of container (100') opens into first portion (231').

13. Device according to claim 1, **CHARACTERIZED BY** THE FACT THAT the outer surface of the end piece (200') has a frustoconical shape for the first end which is attached to the open end of the PID.

14. Method for lubricating a dynamic medical instrument holder, called PID, (300) using the device according to any one of the preceding claims, comprising the following operations:
- filling of a flexible container (100) with a lubricant and air,
- closing by means of a cap (111),
- placing said container (100) and an end piece (200) in a first package,
- sealing of the first package,
- placing the sealed first package in a second slightly larger package,
- sealing of the second package,
- sterilization of the packages,
- sterilization of the PID (300),
- opening of the second package,
- opening of the first package,
- opening of the container (100),
- fitting of the open container (100) into one end (220) of the end piece (200),
- fitting of the end piece (200) into the rear end of the PID (300),
- pressing on the container (100) by the user until completely empty.

15. Method according to claim 14, **CHARACTERIZED IN THAT** the sterilization of the packages is carried out by gamma irradiation.

16. Method according to claim 14, **CHARACTERIZED IN THAT** the second packages containing the first packages are stored in batches in cartons, the whole being subjected to the sterilization.
